# EUROPEAN PATENT SPECIFICATION

(11) **EP 3 312 516 B1**
(45) Date of publication and mention of the grant of the patent: **26.02.2020**
(21) Application number: 17195007.4
(22) Date of filing: 05.10.2017
(51) Int. Cl.: F24D 11/02, F24D 17/02, F28D 20/00

(54) **WATER HEATER**
WARMWASSERBEREITER
CHAUFFE-EAU

(30) Priority: 18.10.2016 JP 2016204061
(43) Date of publication of application: 25.04.2018
(73) Proprietor: Panasonic Intellectual Property Management Co., Ltd., Osaka-shi, Osaka 540-6207 (JP)
(72) Inventor: IMAGAWA, Tsuneko, OSAKA, 540-6207 (JP); YAMAOKA, Yuuki, OSAKA, 540-6207 (JP)
(74) Representative: Eisenführ Speiser

(56) References cited:
- EP-A2- 2 051 016
- DE-B3-102004 059 910
- DE-C- 150 639
- JP-A- S6 256 785
- JP-A- 2012 026 690

## Description

### 1. Technical Field

The present disclosure relates to a tank type water heater which heats water by using a heating unit, and stores the heated water in a hot water tank for use of hot water stored in the tank.

### 2. Description of the Related Art

A water heater of the type described above stores high-temperature hot water in a full or partial capacity of a hot water tank by repeating a cycle of processes for heating water supplied from a bottom of the hot water tank to high-temperature hot water by using a heating unit, and returning the heated water to an upper part of the hot water tank covered by a heat insulation material. For supplying hot water to a user who uses hot water, the stored hot water is mixed with not-heated water to decrease a temperature of the stored hot water to a predetermined temperature for use at a hot water supply terminal.

Operation efficiency of a heat pump type heating unit included in the water heater is dependent on an outside temperature, a target heating temperature, and a water temperature of water supplied to the heating unit. The operation efficiency increases in cases of a high outside temperature, a low target heating temperature, and a low water temperature of supplied water. The outside temperature varies with seasons and operation times of day, while the water temperature varies with temperature conditions of the hot water tank.

Particularly in case of use of a heat utilizing terminal which utilizes heat generated within the hot water tank, such as a bath reheater and a radiator, the water heater is configured to return intermediate temperature water (middle temperature water) to a lower part of the hot water tank. This middle temperature water is produced after heat exchange between hot water within the heat utilizing terminal and hot water within the hot water tank by using a heat exchanger, and has a temperature higher than a temperature of supplied water but not appropriate for supply of hot water for use. Water having a low temperature approximately equivalent to the temperature of supplied water is usually present in the bottom of the hot water tank. However, in case of a configuration using a heat utilizing terminal, middle temperature water present in the lower part of the hot water tank is supplied to the heating unit at the time of heating. In this case, the water temperature of supplied water increases, and thus the efficiency considerably lowers.

A water heater described in Japanese Unexamined Patent Publication No. 2012-26690 includes: a first hot water outlet pipe connected to an upper part of a hot water tank; a water supply pipe connected to a lower part of the hot water tank; a second hot water outlet pipe connected to the hot water tank at a position between a position of connection of the hot water tank and the first hot water outlet pipe, and a position of connection of the hot water tank and the water supply pipe; a heat utilization hot water outlet pipe connected to the upper part of the hot water tank; a heat exchanger connected to the heat utilization hot water outlet pipe; and a heat utilization return pipe connected to the heat exchanger and the hot water tank. The heat utilization return pipe is connected to a higher position of the hot water tank than the position of connection of the hot water tank and the second hot water outlet pipe.

EP patent application 2 051 016 discloses a storage type hot water supply system. JP patent application S62-56785 discloses a heat accumulating tank. DE patent 10 2004 059 910 discloses a hot water system for providing hot water which has a water output line with upper and lower outlet apertures and a switching device containing a mechanical valve element.

### SUMMARY

According to Japanese Unexamined Patent Publication No. 2012-26690, middle temperature water produced by hot water returning from the heat exchanger to the hot water tank is effectively utilized by using the second hot water outlet pipe in case of use of hot water by a heat utilizing terminal.

It is an object of the present disclosure to provide a water heater which extracts parts of middle temperature water having different temperatures to increase an extraction amount of middle temperature water not appropriate for hot water supply, and reduce a heating amount of middle temperature water which lowers efficiency during heating.

A water heater according to the present disclosure includes, amongst others, a hot water tank, a heating unit which heats water in the hot water tank, and a middle temperature water outlet unit provided inside the hot water tank. The middle temperature water outlet unit includes: a plurality of openings through which hot water within the hot water tank flows into the middle temperature water outlet unit; a switching portion that changes an opening area of each of the plurality of openings; a shape memory portion that moves the switching portion based on a temperature of hot water around the shape memory portion; and an extraction portion. The middle temperature water outlet unit mixes respective parts of the hot water flowing from the plurality of openings into the middle temperature water outlet unit to produce hot water having a predetermined temperature, and discharges the hot water having the predetermined temperature from the extraction portion to an outside of the middle temperature water outlet unit. When at least two of the plurality of openings are opened, a temperature of the hot water flowing into the middle temperature water outlet unit from one of the two opened openings is different from a temperature of the hot water flowing into the middle temperature water outlet unit from another one of the two opened openings.

The water heater provided according to the present disclosure reduces a heating amount of middle temperature water which lowers efficiency during heating and has improved energy saving performance.

The invention is set out in the appended set of claims. The embodiments and/or examples of the following description which are not covered by the appended claims are considered as not being part of the present invention.

### BRIEF DESCRIPTION OF THE DRAWINGS

FIG. 1 is a configuration view illustrating a water heater according to a first exemplary embodiment of the present disclosure;
FIG. 2A is a temperature distribution diagram, where a horizontal axis and a vertical axis represent a temperature and a height position in a hot water tank, respectively;
FIG. 2B is a temperature distribution diagram, where a horizontal axis and a vertical axis represent a temperature and a height position in a hot water tank, respectively;
FIG. 3A is an explanatory view illustrating a configuration and an operation of a middle temperature water outlet unit according to the first exemplary embodiment;
FIG. 3B is an explanatory view illustrating the configuration and the operation of the middle temperature water outlet unit according to the first exemplary embodiment;
FIG. 3C is an explanatory view illustrating the configuration and the operation of the middle temperature water outlet unit according to the first exemplary embodiment;
FIG. 3D is an explanatory view illustrating the configuration and the operation of the middle temperature water outlet unit according to the first exemplary embodiment;
FIG. 3E is an explanatory view illustrating the configuration and the operation of the middle temperature water outlet unit according to the first exemplary embodiment;
FIG. 4 is a configuration view illustrating a water heater according to a second exemplary embodiment of the present disclosure;
FIG. 5A is an explanatory view illustrating a configuration and an operation of a middle temperature water outlet unit according to the second exemplary embodiment;
FIG. 5B is an explanatory view illustrating the configuration and the operation of the middle temperature water outlet unit according to the second exemplary embodiment;
FIG. 5C is an explanatory view illustrating the configuration and the operation of the middle temperature water outlet unit according to the second exemplary embodiment;
FIG. 5D is an explanatory view illustrating the configuration and the operation of the middle temperature water outlet unit according to the second exemplary embodiment;
FIG. 5E is an explanatory view illustrating the configuration and the operation of the middle temperature water outlet unit according to the second exemplary embodiment;
FIG. 6 is a configuration view illustrating a water heater according to a third exemplary embodiment of the present disclosure;
FIG. 7A is an explanatory view illustrating a configuration and an operation of a middle temperature water outlet unit according to the third exemplary embodiment;
FIG. 7B is an explanatory view illustrating the configuration and the operation of the middle temperature water outlet unit according to the third exemplary embodiment;
FIG. 7C is an explanatory view illustrating the configuration and the operation of the middle temperature water outlet unit according to the third exemplary embodiment;
FIG. 7D is an explanatory view illustrating the configuration and the operation of the middle temperature water outlet unit according to the third exemplary embodiment;
FIG. 7E is an explanatory view illustrating the configuration and the operation of the middle temperature water outlet unit according to the third exemplary embodiment; and
FIG. 8 is a configuration view illustrating a water heater according to a fourth exemplary embodiment of the present disclosure.

### DETAILED DESCRIPTION

A water heater according to a first aspect of the present disclosure includes a hot water tank, and a middle temperature water outlet unit provided inside the hot water tank. The middle temperature water outlet unit includes: a plurality of openings through which hot water within the hot water tank flows into the middle temperature water outlet unit; a switching portion that changes an opening area of each of the plurality of openings; a shape memory portion that moves the switching portion based on a temperature of hot water around the shape memory portion; and an extraction portion. The middle temperature water outlet unit mixes respective parts of the hot water flowing from the plurality of openings into the middle temperature water outlet unit to produce hot water having a predetermined temperature, and discharges the hot water having the predetermined temperature from the extraction portion to an outside of the middle temperature water outlet unit. When at least two of the plurality of openings are opened, a temperature of the hot water flowing into the middle temperature water outlet unit from one of the two opened openings is different from a temperature of the hot water flowing into the middle temperature water outlet unit from another one of the two opened openings.

According to the present aspect, parts of hot water having different temperatures within the hot water tank are mixed and extracted as middle temperature water at the middle temperature water outlet unit to increase an extraction amount of middle temperature water inappropriate for hot water supply. Accordingly, there can be provided the water heater which reduces a heating amount of middle temperature water which lowers efficiency during heating and has improved energy saving performance. The hot water is mixed at the middle temperature water outlet unit by using a shape memory portion which moves a switching portion based on a temperature of surrounding hot water. Accordingly, parts of hot water having different temperatures are extractable without having components such as a sensor for detecting a temperature, an electric valve for opening and closing an opening, and a controller for driving the electric valve based on a detection temperature of the sensor.

According to a second aspect of the present disclosure, the plurality of openings of the water heater of the first aspect are formed in a vertical direction inside the hot water tank. The "vertical direction" in this context includes a "substantially vertical direction".

According to the present aspect, in a water drained state of the hot water tank, hot water flows out through the opening located at the lowest position in the vertical direction without staying in the middle temperature water outlet unit. Accordingly, freezing fracture caused by hot water staying within the middle temperature water outlet unit is avoidable.

According to a third aspect of the present disclosure, all of the plurality of openings of the water heater of the first or second aspect are formed at heights equal to or lower than a height of the extraction portion.

According to the present aspect, during a stop of extraction of middle temperature water, the extraction portion is filled with hot water having a higher temperature than a temperature of hot water staying at the positions of the openings. In this case, this high temperature hot water flows out in an initial period of extraction of middle temperature water. Accordingly, hot water having a predetermined temperature is rapidly supplied.

According to a fourth aspect of the present disclosure, all of the plurality of openings of the water heater of the first or second aspect are formed at heights equal to or higher than a height of the extraction portion.

According to the present aspect, low temperature water having released heat at an outside pipe of the hot water tank enters the extraction portion during a stop of extraction of middle temperature water. However, in the state that the extraction portion is disposed at a position lower than the openings, high temperature hot water present inside the hot water tank is not cooled. Accordingly, an amount of high temperature water inside the hot water tank does not decrease.

According to a fifth aspect of the present disclosure, the plurality of openings of the water heater of the first or second aspect are formed at different heights equal to or higher or lower than a height of the extraction portion.

According to the present aspect, rapid supply of hot water having a predetermined temperature, and a stable temperature distribution within the hot water tank are achievable during extraction of middle temperature water. Moreover, high temperature water within the hot water tank does not decrease during a stop of extraction of middle temperature water.

According to a sixth aspect of the present disclosure, the water heater according to any one of the first through fifth aspects further includes: a heat utilization hot water outlet pipe connected to an upper part of the hot water tank to supply the hot water having a high temperature and present within the hot water tank to a heat exchanger provided outside the hot water tank; and a heat utilization return pipe provided to return the hot water from the heat exchanger into the hot water tank. A position of the hot water returning from the heat utilization return pipe into the hot water tank is located at a height between the opening located at a highest position and the opening located at a lowest position in the plurality of openings.

According to the present aspect, middle temperature water flowing into and diffusing in the hot water tank from the heat utilization return pipe is extracted through the openings having different heights, and used for supply of hot water. Accordingly, there can be provided the water heater which reduces a heating amount of middle temperature water which lowers efficiency during heating and has improved energy saving performance.

According to a seventh aspect of the present disclosure, the water heater according to any one of the first through fifth aspects further includes a heat exchanger provided inside the hot water tank to exchange heat with the hot water having a high temperature and present within the hot water tank. A setting position of a highest part of the heat exchanger is located at a height between the opening located at a highest position and the opening located at a lowest position in the plurality of openings.

According to the present aspect, hot water having a high temperature and present within the hot water tank exchanges heat with the heat exchanger provided inside the hot water tank. As a result, the hot water within the hot water tank becomes middle temperature water by a temperature drop caused by the heat exchanger, and diffuses within the hot water tank. The middle temperature water thus produced is extracted through the openings having different heights, and used for supply of hot water. In this case, a heating amount of middle temperature water which lowers efficiency during heating decreases. Accordingly, there can be provided the water heater having improved energy saving performance.

### FIRST EXEMPLARY EMBODIMENT

A water heater according to a first exemplary embodiment of the present disclosure is hereinafter described.

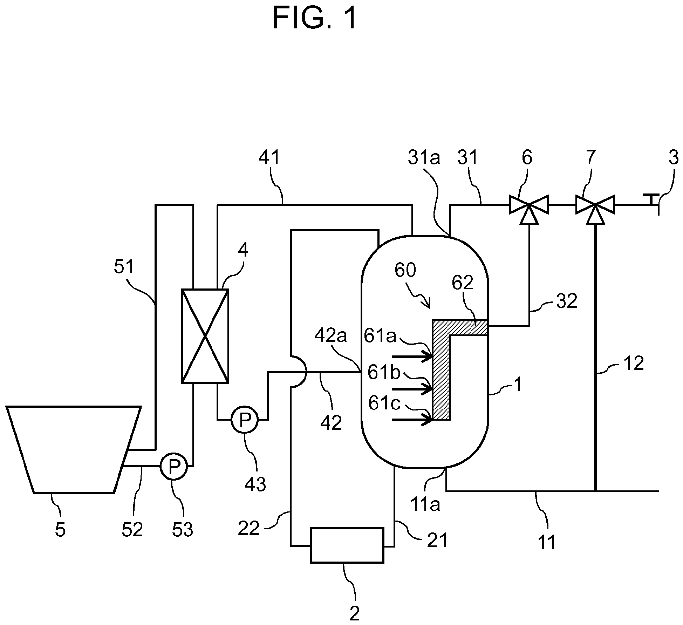

FIG. 1 is a configuration view illustrating the water heater according to the first exemplary embodiment.

The water heater according to the present exemplary embodiment includes hot water tank 1, heating unit 2 which heats water in hot water tank 1, hot water supply port 3 through which high-temperature hot water (high temperature water) flows out from hot water tank 1, and heat exchanger 4 disposed outside hot water tank 1 and using the high temperature water within hot water tank 1 as a heating source. Heat utilizing terminal 5 utilizes a heat medium heated by heat exchanger 4.

Water supply pipe 11 is connected to a lower part of hot water tank 1. Water is supplied from water supply pipe 11 to hot water tank 1 to maintain a fixed amount of hot water in hot water tank 1. Connection end 11a of water supply pipe 11 corresponds to a hot water tank connection position of water supply pipe 11.

Heating unit 2 is constituted by a heat pump device, for example. Hot water tank 1 and heating unit 2 are connected with each other via water outlet pipe 21 and return pipe 22. One end of water outlet pipe 21 is connected to the lower part of hot water tank 1, while another end of water outlet pipe 21 is connected to heating unit 2. One end of return pipe 22 is connected to heating unit 2, while another end of return pipe 22 is connected to an upper part of hot water tank 1. Low-temperature hot water (low temperature water) present in the lower part of hot water tank 1 is guided toward heating unit 2 via water outlet pipe 21. High temperature water heated by heating unit 2 is returned to the upper part of hot water tank 1 via return pipe 22 to be stored in hot water tank 1 in a thermal stratification state.

Hot water supply port 3 is connected to hot water tank 1 via first hot water outlet pipe 31. One end 31a of first hot water outlet pipe 31 is connected to the upper part of hot water tank 1, while another end of first hot water outlet pipe 31 is connected to hot water supply port 3. High temperature water present in the upper part of hot water tank 1 is guided to hot water supply port 3 via first hot water outlet pipe 31. One end 31a of first hot water outlet pipe 31 corresponds to a hot water tank connection position of first hot water outlet pipe 31.

First hot water outlet pipe 31 includes first mixture valve 6 and second mixture valve 7. First mixture valve 6 is an upstream valve disposed on an upstream side with respect to second mixture valve 7, i.e., on a hot water tank 1 side with respect to second mixture valve 7.

Second hot water outlet pipe 32 is connected to first mixture valve 6. One end of second hot water outlet pipe 32 is connected to a vertically intermediate portion of hot water tank 1, while another end of second hot water outlet pipe 32 is connected to first mixture valve 6. Middle temperature hot water (middle temperature water) present in the vertically intermediate portion of hot water tank 1 is guided to first mixture valve 6 via second hot water outlet pipe 32.

Water supply branch pipe 12 is connected to second mixture valve 7. One end of water supply branch pipe 12 is connected to water supply pipe 11, while another end of water supply branch pipe 12 is connected to second mixture valve 7. Low temperature water supplied from water supply branch pipe 12 is guided to second mixture valve 7.

High temperature water from first hot water outlet pipe 31, and middle temperature water from second hot water outlet pipe 32 flow into first mixture valve 6. The high temperature water and the middle temperature water thus entered are mixed at first mixture valve 6, and guided to second mixture valve 7.

Hot water from first mixture valve 6 and low temperature water from water supply branch pipe 12 flow into second mixture valve 7. The hot water from first mixture valve 6 and the low temperature water are mixed at second mixture valve 7, and guided to hot water supply port 3.

Hot water tank 1 and heat exchanger 4 are connected with each other via heat utilization hot water outlet pipe 41 and heat utilization return pipe 42. One end of heat utilization hot water outlet pipe 41 is connected to the upper part of hot water tank 1, while another end of heat utilization hot water outlet pipe 41 is connected to heat exchanger 4. One end of heat utilization return pipe 42 is connected to heat exchanger 4, while another end 42a of heat utilization return pipe 42 is connected to the vertically intermediate portion of hot water tank 1. Other end 42a of heat utilization return pipe 42 corresponds to a hot water tank connection position of heat utilization return pipe 42. Circulation pump 43 is provided on heat utilization return pipe 42. High temperature water present in the upper part of hot water tank 1 is guided to heat exchanger 4 via heat utilization hot water outlet pipe 41. Middle temperature water having released heat at heat exchanger 4 is returned to the vertically intermediate portion of hot water tank 1 via heat utilization return pipe 42.

Heat exchanger 4 and heat utilizing terminal 5 are connected to each other via heat medium supply pipe 51 and heat medium return pipe 52. One end of heat medium supply pipe 51 is connected to heat exchanger 4, while another end of heat medium supply pipe 51 is connected to heat utilizing terminal 5. One end of heat medium return pipe 52 is connected to heat utilizing terminal 5, while another end of heat medium return pipe 52 is connected to heat exchanger 4. Circulation pump 53 is provided on heat medium return pipe 52. A heat medium of heat utilizing terminal 5 is guided to heat exchanger 4 via heat medium return pipe 52. The heat medium heated at heat exchanger 4 is supplied to heat utilizing terminal 5 via heat medium supply pipe 51.

Middle temperature water outlet unit 60 is provided inside hot water tank 1.

Middle temperature water outlet unit 60 includes a plurality of openings 61a, 61b, 61c, and extraction portion 62.

The plurality of openings 61a, 61b, 61c are formed in hot water tank 1 in a vertical direction (including substantially vertical direction) of hot water tank 1. Extraction portion 62 is connected to second hot water outlet pipe 32.

All of openings 61a, 61b, 61c are formed between hot water tank connection position 31a of first hot water outlet pipe 31 and hot water tank connection position 11a of water supply pipe 11. The plurality of openings 61a, 61b, 61c are formed in the vertically intermediate portion of hot water tank 1 to extract parts of middle temperature water having different temperatures.

According to the present exemplary embodiment, parts of hot water having different temperatures within hot water tank 1 are mixed and extracted as middle temperature water at middle temperature water outlet unit 60 to increase an extraction amount of middle temperature water inappropriate for hot water supply. Accordingly, there can be provided the water heater which can reduce an extraction amount of high temperature water extracted from the upper part of hot water tank 1 and has improved energy saving performance.

Moreover, the plurality of openings 61a, 61b, 61c are formed in hot water tank 1 in the vertical direction (including substantially vertical direction) of hot water tank 1 according to the present exemplary embodiment. In this case, in a water drained state of hot water tank 1, hot water flows out through opening 61c located at the lowest position in the vertical direction without staying in middle temperature water outlet unit 60. Accordingly, freezing fracture caused by hot water staying within middle temperature water outlet unit 60 is avoidable.

Parts of hot water having different temperatures and flowing into middle temperature water outlet unit 60 through at least two of the plurality of openings 61a, 61b, 61c are mixed within middle temperature water outlet unit 60, and flow out from extraction portion 62 into second hot water outlet pipe 32.

Hot water tank connection position 42a of heat utilization return pipe 42 is disposed at a height between opening 61a located at the highest position and opening 61c located at the lowest position. When the position of hot water returning from heat utilizing return pipe 42 into hot water tank 1 is disposed at the height between opening 61a located at the highest position and opening 61c located at the lowest position as in this configuration, middle temperature water flowing from heat utilization return pipe 42 into hot water tank 1 and diffusing within hot water tank 1 is extractable through openings 61a, 61b, 61c having different heights for use of hot water supply. Accordingly, particularly in case of using a heat pump device as heating unit 2 , there can be provided the water heater which reduces a heating amount of middle temperature water which lowers efficiency during heating and has improved energy saving performance.

It is preferable that hot water tank connection position 42a of heat utilization return pipe 42 is disposed at a position equal to or higher than opening 61b located at the second highest position following opening 61a located at the highest position. Middle temperature water flowing from heat utilization return pipe 42 into hot water tank 1 has larger specific gravity than specific gravity of high temperature water. Accordingly, the middle temperature water thus introduced diffuses more in an area lower than hot water tank connection position 42a of heat utilization return pipe 42. In this case, a larger amount of middle temperature water is extractable when a larger number of openings (openings 61b, 61c) are provided below hot water tank connection position 42a of heat utilization return pipe 42 than a number of openings (opening 61a) located above hot water tank connection position 42a of heat utilization return pipe 42.

All of openings 61a, 61b, 61c are formed at a height of extraction portion 62 or lower. During a stop of extraction of middle temperature water, extraction portion 62 is filled with hot water having a higher temperature than a temperature of hot water staying at the positions of openings 61a, 61b, 61c. When all of openings 61a, 61b, 61c are formed at the height of extraction portion 62 or lower as in this configuration, the high temperature hot water present in extraction portion 62 flows out in an initial period of extraction of middle temperature water. Accordingly, hot water having a predetermined temperature is rapidly supplied.

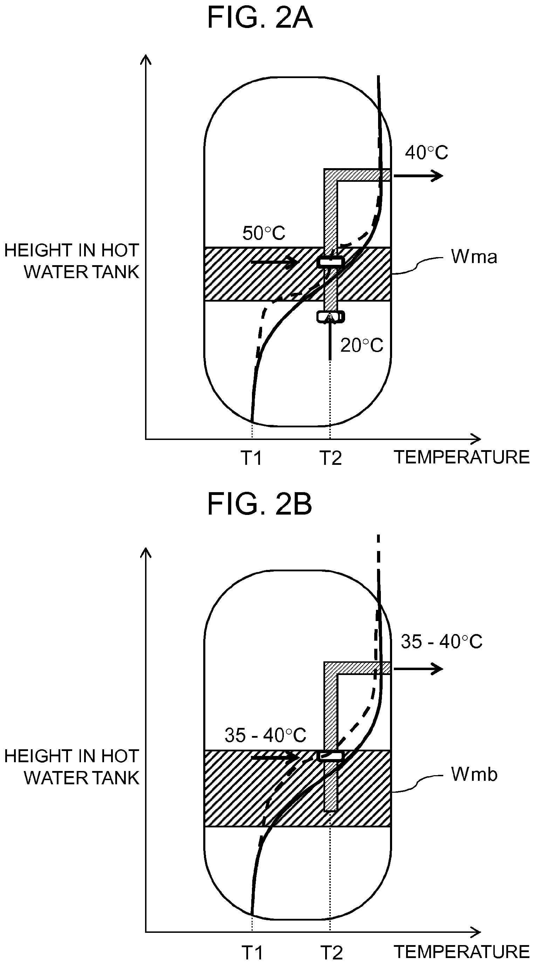

FIGS. 2A and 2B are temperature distribution diagrams. In the respective figures, a horizontal axis represents a temperature, while a vertical axis represents a height in the hot water tank. FIG. 2A shows a result of the present exemplary embodiment, while FIG. 2B shows a result of an example of extraction of middle temperature water only from opening 61b while switching between a full open state and a full close state of opening 61b at predetermined temperatures (e.g., opening 61b full-opened in a range from 35°C to 40°C).

In the respective figures, T1 indicates a water supply temperature, T2 indicates an upper limit temperature of middle temperature water, Wma, Wmb each indicate a layer of middle temperature water from water supply temperature T1 to middle temperature water upper limit temperature T2, a solid line indicates a temperature distribution before discharge of hot water from middle temperature water outlet unit 60, and a broken line indicates a temperature distribution after discharge of hot water from middle temperature water outlet unit 60.

As illustrated in FIG. 2B, only hot water present near opening 61b and having predetermined temperatures is extractable by simple switching between opening and closing based on temperatures. During discharge, the entire hot water in hot water tank 1 shifts upward. In this case, only hot water having the predetermined temperatures, such as temperatures in the range from 35°C to 40°C, and coming close to opening 61b is extractable. After discharge, middle temperature water is present in the area of Wmb.

According to the present exemplary embodiment, however, hot water near opening 61b and hot water near opening 61c are mixed as illustrated in FIG. 2A. In this case, no limitation is imposed on the range of the extraction temperature. Even when hot water in hot water tank 1 shifts upward in this configuration, the hot water is sucked through the plurality of openings by shape memory portions described below. Respective parts of the sucked hot water are mixed into hot water having a predetermined temperature.

After discharge, middle temperature water is present only in the area of Wma containing a smaller amount of middle temperature water than the amount of Wmb, indicating effective utilization of the middle temperature water. As a result, a heating amount of middle temperature water which lowers efficiency during heating decreases.

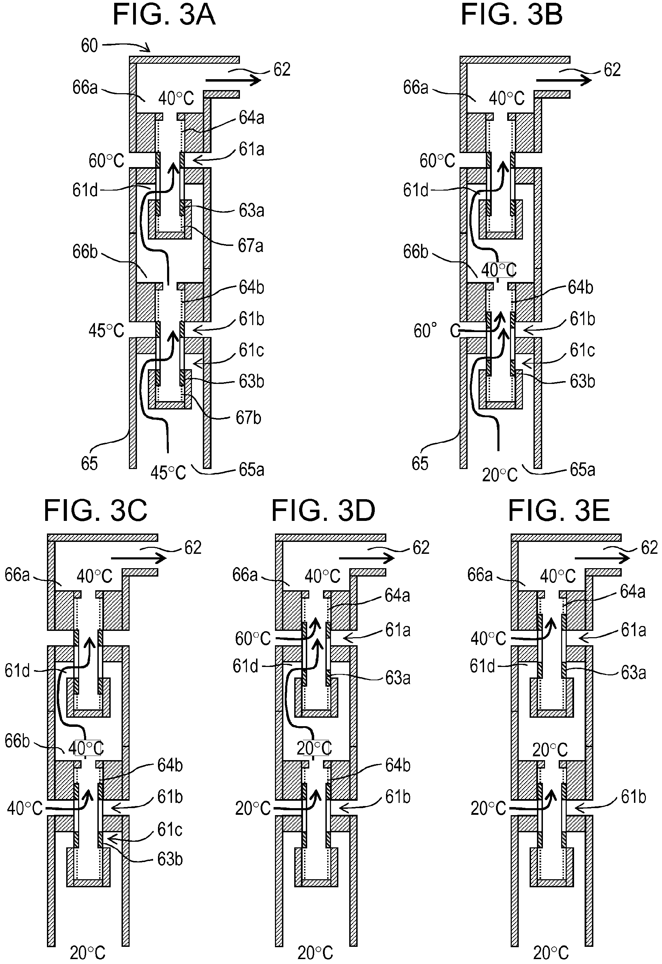

FIGS. 3A through 3E are explanatory views each illustrating a configuration and an operation of the middle temperature water outlet unit according to the first exemplary embodiment.

The configuration of middle temperature water outlet unit 60 is initially described with reference to FIG. 3A.

Middle temperature water outlet unit 60 includes the plurality of openings 61a, 61b, 61c, 61d, extraction portion 62, switching portions 63a, 63b for changing respective opening areas of the plurality of openings 61a, 61b, 61c, 61d, and shape memory portions 64a, 64b for moving switching portions 63a, 63b in accordance with temperatures of surrounding hot water. The plurality of openings 61a, 61b, 61c communicate with inside and outside of middle temperature water outlet unit 60 to introduce hot water from the outside of middle temperature outlet unit 60 into middle temperature outlet unit 60 when openings 61a, 61b, 61c are opened.
Opening 61d is an opening through which hot water having entered opening 61b or opening 61c, or hot water having entered both openings 61b and 61c is introduced, and guided toward extraction portion 62. Accordingly, opening 61d is not an opening through which hot water present outside middle temperature water outlet unit 60 is introduced into middle temperature water outlet unit 60.

The plurality of openings 61a, 61b, 61c, 61d are formed in cylindrical middle temperature water outlet unit body 65. Opening 61c communicates with lower end opening 65a of middle temperature water outlet unit body 65. Opening 61b is formed above opening 61c. Opening 61d is formed above opening 61b. Opening 61a is formed above opening 61d.

Mixing portion 66a, 66b are formed inside middle temperature water outlet unit body 65.

Mixing portion 66a is formed above opening 61a. Mixing portion 66b is formed above opening 61b and below opening 61d.

Switching portion 63a shifts in a height direction to change opening areas of opening 61a and opening 61d.

Shape memory portion 64a is provided above (downstream side) switching portion 63a. Shape memory portion 64a moves switching portion 63a upward when a temperature of surrounding hot water becomes lower than a predetermined temperature. It is preferable that switching portion 63a is moved by urging spring 67a as well as by shape memory portion 64a as illustrated in the figure. When switching portion 63a is moved by both shape memory portion 64a and urging spring 67a, an operation temperature for a temperature rise and an operation temperature for a temperature drop are equalized.

Switching portion 63b changes opening areas of opening 61b and opening 61c by shifting in the height direction.

Shape memory portion 64b is provided above (downstream side) switching portion 63b. Shape memory portion 64b moves switching portion 63b upward when a temperature of surrounding hot water becomes lower than a predetermined temperature. It is preferable that switching portion 63b is moved by urging spring 67b as well as by shape memory portion 64b as illustrated in the figure. When switching portion 63b is moved by both shape memory portion 64b and urging spring 67b, an operation temperature for a temperature rise and an operation temperature for a temperature drop are equalized.

Described hereinafter is an operation of middle temperature water outlet unit body 65 performed when a temperature of hot water at extraction portion 62 is set to 40°C. According to settings of the present exemplary embodiment, shape memory portions 64a, 64b deform in a contracting direction when a temperature of surrounding hot water becomes lower than 40°C.

FIG. 3A illustrates a state that the temperature of hot water at lower end opening 65a of middle temperature water outlet unit body 65 is 45°C.

In this case, the temperature of hot water at lower end opening 65a is higher than 40°C. Accordingly, shape memory portion 64b expands, and thus switching portion 63b shifts downward. In the state of switching portion 63b shifted downward, opening 61c is opened, while opening 61b is closed.

On the other hand, in a state that shape memory portion 64a is located above lower end opening 65a, the temperature of hot water around shape memory portion 64a is higher than 40°C. In this case, shape memory portion 64a expands, and thus switching portion 63a shifts downward. In the state of switching portion 63a shifted downward, opening 61d is opened, while opening 61a is closed.

In the state illustrated in FIG. 3A, hot water present at lower end opening 65a enters opening 61c, and sequentially passes through mixing portion 66b, opening 61d, and mixing portion 66a to be guided toward extraction portion 62.

FIG. 3B illustrates a state that the temperature of hot water at lower end opening 65a of middle temperature water outlet unit body 65 decreases to 20°C.

When the temperature of hot water at lower end opening 65a of middle temperature water outlet unit body 65 lowers, the temperature of hot water around shape memory portion 64b also lowers. As a result, shape memory portion 64b contracts, and thus switching portion 63b shifts upward.

The opening area of opening 61c decreases by the upward shift of switching portion 63b. Accordingly, opening 61b starts to open. An entrance amount of water at 20°C decreases by the decrease in the opening area of opening 61c, while an entrance amount of hot water at 60°C increases by the increase in the opening area of opening 61b. The temperature of hot water around shape memory portion 64b increases by the opened state of opening 61b. Switching portion 63b shifts until the temperature of hot water around shape memory portion 64b becomes 40°C.

In the state illustrated in FIG. 3B, hot water enters opening 61c and opening 61 b, and sequentially passes through mixing portion 66b, opening 61d, and mixing portion 66a to be guided toward extraction portion 62. In this case, the parts of hot water entering opening 61c and opening 61b have different temperatures of 20°C and 60°C, respectively.

FIG. 3C illustrates a state that the temperature of hot water at opening 61b decreases to 40°C.

When the temperature of hot water at opening 61b decreases to 40°C, the temperature of hot water around shape memory portion 64b decreases to a temperature lower than 40°C by entrance of hot water from opening 61b. As a result, shape memory portion 64b contracts, and thus switching portion 63b shifts upward.

Opening 61c is closed by the upward shift of switching portion 63b. Accordingly, only opening 61b is open.

In the state illustrated in FIG. 3C, hot water flows only through opening 61b into opening 61d, and sequentially passes through mixing portion 66b, opening 61d, and mixing portion 66a to be guided toward extraction portion 62.

FIG. 3D illustrates a state that the temperature of hot water at opening 61b decreases to a temperature lower than 40°C, such as 20°C.

When the temperature of hot water at opening 61b decreases to 20°C, the temperature of hot water around shape memory portion 64a becomes lower than 40°C. As a result, shape memory portion 64a contracts, and thus switching portion 63a shifts upward.

The opening area of opening 61d decreases by the upward shift of switching portion 63a. Accordingly, opening 61a starts to open. An entrance amount of water at 20°C decreases by the decrease in the opening area of opening 61d, while an entrance amount of hot water at 60°C increases by the increase in the opening area of opening 61a. The temperature of hot water around shape memory portion 64a increases by the opened state of opening 61a. Switching portion 63a shifts until the temperature of hot water around shape memory portion 64a becomes 40°C.

In the state illustrated in FIG. 3D, hot water enters opening 61b and opening 61a, and passes through mixing portion 66a to be guided toward extraction portion 62. In this case, parts of the hot water entering opening 61b and opening 61a have different temperatures of 20°C and 60°C, respectively.

FIG. 3E illustrates a state that the temperature of hot water at opening 61a decreases to 40°C.

When the temperature of hot water at opening 61a decreases to 40°C, the temperature of hot water around shape memory portion 64a decreases to a temperature lower than 40°C by entrance of hot water from opening 61b. As a result, shape memory portion 64a contracts, and thus switching portion 63a shifts upward.

Opening 61d is closed by the upward shift of switching portion 63a. Accordingly, only opening 61a is open.

In the state illustrated in FIG. 3E, hot water enters opening 61a and opening 61b, and passes through mixing portion 66a to be guided toward extraction portion 62. In this case, parts of the hot water entering opening 61a and opening 61b have different temperatures of 40°C and 20°C, respectively.

While the operation temperatures of shape memory portion 64a and shape memory portion 64b are set to the same temperature of 40°C according to the present exemplary embodiment described herein, the operation temperature of shape memory portion 64b may be set to a temperature lower than the operation temperature of shape memory portion 64a. When extraction portion 62 is located at a position higher than shape memory portion 64b, the hot water coming from opening 61b or opening 61c and having a temperature of 40°C, for example, is mixed with hot water present within mixing portion 66a and heated by heat conduction from surrounding high-temperature hot water. As a result, the temperature of the mixed hot water exceeds 40°C at extraction portion 62. Accordingly, a considerable change from the set temperature at extraction portion 62 is avoidable when the operation temperature of shape memory portion 64b is set to a temperature lower than 40°C. In addition, in case of shape memory portion 64b having the operation temperature lower than the operation temperature of shape memory portion 64a, switching portion 63b may perform rough temperature adjustment, while switching portion 63a may perform precise temperature adjustment.

### SECOND EXEMPLARY EMBODIMENT

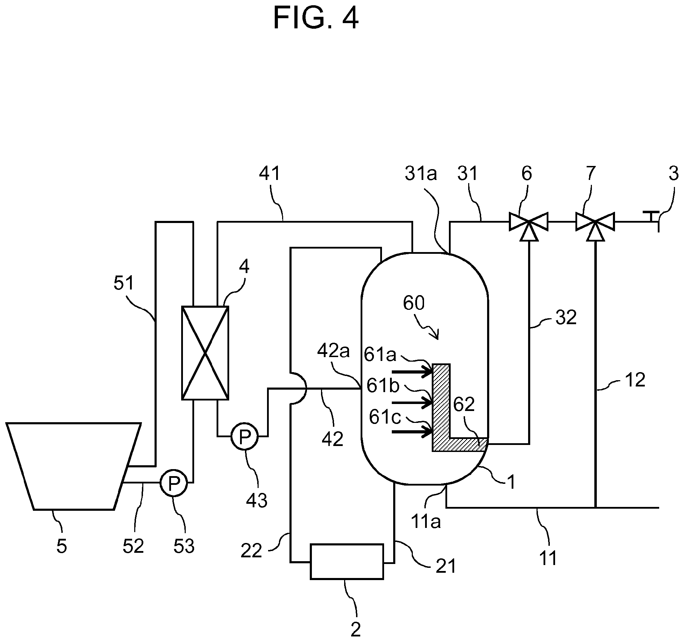

FIG. 4 is a configuration view illustrating a water heater according to a second exemplary embodiment. In the present exemplary embodiment, constituent elements similar to the corresponding elements in the first exemplary embodiment have been given similar reference numbers, and the same description of these elements is not repeated herein.

According to the present exemplary embodiment, all of openings 61a, 61b, 61c of middle temperature water outlet unit 60 are formed at heights equal to or higher than the height of extraction portion 62. When all of openings 61a, 61b, 61c are formed at heights equal to or higher than the height of extraction portion 62, low temperature water having released heat at second hot water outlet pipe 32 provided as an outside pipe of hot water tank 1 enters extraction portion 62 during a stop of extraction of middle temperature water. However, in the state that extraction portion 62 is disposed at a position lower than openings 61a, 61b, 61c, high temperature hot water present inside hot water tank 1 is not cooled. Accordingly, the amount of high temperature water inside hot water tank 1 does not decrease.

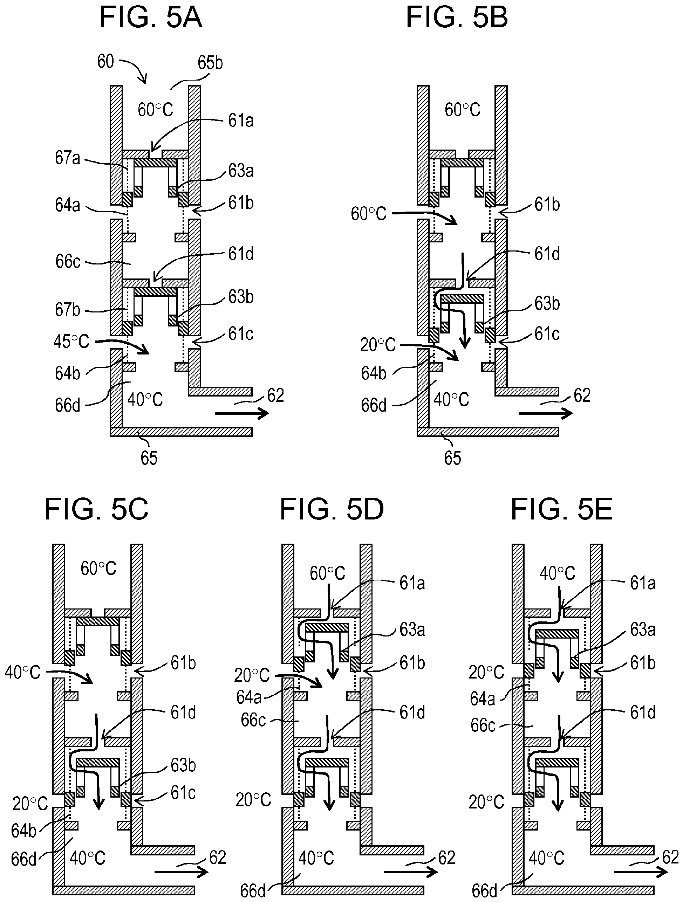

FIGS. 5A through 5E are explanatory views illustrating a configuration and an operation of the middle temperature water outlet unit according to the second exemplary embodiment. In the present exemplary embodiment, a part of explanation similar to the explanation of the first exemplary embodiment is not repeated.

The configuration of middle temperature water outlet unit 60 is described herein with reference to FIG. 5A.

According to the present exemplary embodiment, opening 61a communicates with upper end opening 65b of middle temperature water outlet unit body 65.

Mixing portions 66c, 66d are provided inside middle temperature water outlet unit body 65.

Mixing portion 66c is disposed below opening 61b and above opening 61d. Mixing portion 66d is disposed below opening 61c.

Switching portion 63a shifts in the height direction to change opening areas of opening 61a and opening 61b.

Shape memory portion 64a is provided below (downstream side) switching portion 63a. Shape memory portion 64a moves switching portion 63a downward when a temperature of surrounding hot water becomes lower than a predetermined temperature.

Switching portion 63b changes opening areas of opening 61d and opening 61c by shifting in the height direction.

Shape memory portion 64b is provided below (downstream side) switching portion 63b. Shape memory portion 64b moves switching portion 63b downward when a temperature of surrounding hot water becomes lower than a predetermined temperature.

Described hereinafter is an operation of middle temperature water outlet unit body 65 performed when a temperature of hot water at extraction portion 62 is set to 40°C. Shape memory portions 64a, 64b deform in a contracting direction when the temperature of surrounding hot water becomes lower than 40°C.

FIG. 5A illustrates a state that the temperature of hot water at lower end opening 65a of middle temperature water outlet unit body 65 is 45°C.

In this case, the temperature of hot water at lower end opening 61c is higher than 40°C. Accordingly, shape memory portion 64b expands, and thus switching portion 63b shifts upward. In the state of switching portion 63b shifted upward, opening 61c is opened, while opening 61d is closed.

On the other hand, in a state that shape memory portion 64a is located above opening 61c, the temperature of hot water around shape memory portion 64a is higher than 40°C. In this case, shape member portion 63a expands, and thus switching portion 63a shifts upward. In the state of switching portion 63a shifted upward, opening 61b is opened, while opening 61a is closed.

In the state illustrated in FIG. 5A, hot water enters opening 61c, and passes through mixing portion 66d to be guided toward extraction portion 62.

FIG. 5B illustrates a state that the temperature of hot water at opening 61c of middle temperature water outlet unit body 65 decreases to 20°C.

When the temperature of hot water at opening 61c of middle temperature water outlet unit body 65 lowers, the temperature of hot water around shape memory portion 64b also lowers. As a result, shape memory portion 64b contracts, and thus switching portion 63b shifts downward.

The opening area of opening 61c decreases by the downward shift of switching portion 63b. Accordingly, opening 61d starts to open. In the opened state opening 61b, hot water at 60°C enters opening 61d from opening 61b. An entrance amount of water at 20°C decreases by the decrease in the opening area of opening 61c, while an entrance amount of hot water at 60°C increases by the increase in the opening area of opening 61d. The temperature of hot water around shape memory portion 64b increases by the opened state of opening 61d. Switching portion 63b shifts until the temperature of hot water around shape memory portion 64b becomes 40°C.

In the state illustrated in FIG. 5B, hot water enters opening 61c and opening 61b, and passes through mixing portion 66d to be guided toward extraction portion 62. In this case, the parts of hot water entering opening 61c and opening 61b have different temperatures of 20°C and 60°C, respectively.

FIG.5C illustrates a state that the temperature of hot water at opening 61b decreases to 40°C.

When the temperature of hot water at opening 61b decreases to 40°C, the temperature of hot water around shape memory portion 64b decreases to a temperature lower than 40°C by entrance of hot water from opening 61b. As a result, shape memory portion 64b contracts, and thus switching portion 63b shifts downward.

Opening 61c is closed by the downward shift of switching portion 63b. Accordingly, only opening 61d is open.

In the state illustrated in FIG. 5C, hot water enters only opening 61b into opening 61d, and passes through mixing portion 66d to be guided toward extraction portion 62.

FIG. 5D illustrates a state that the temperature of hot water at opening 61b decreases to a temperature lower than 40°C, such as 20°C.

When the temperature of hot water at opening 61b decreases to 20°C, the temperature of hot water around shape memory portion 64a decreases to a temperature lower than 40°C by mixture between this hot water and hot water present within mixing portion 66d and cooled by heat conduction from surrounding low temperature hot water. As a result, shape memory portion 64a contracts, and thus switching portion 63a shifts downward.

The opening area of opening 61b decreases by the downward shift of switching portion 63a. Accordingly, opening 61a starts to open. An entrance amount of water at 20°C decreases by the decrease in the opening area of opening 61b, while an entrance amount of hot water at 60°C increases by the increase in the opening area of opening 61a. The temperature of hot water around shape memory portion 64a increases by the opened state of opening 61a. Switching portion 63a shifts until the temperature of hot water around shape memory portion 64a becomes 40°C.

In the state illustrated in FIG. 5D, hot water enters opening 61b and opening 61a, and sequentially passes through mixing portion 66c, opening 61d, and mixing portion 66d to be guided toward extraction portion 62. In this case, parts of the hot water entering opening 61a and opening 61b have different temperatures of 60°C and 20°C, respectively.

FIG. 5E illustrates a state that the temperature of hot water at opening 61a decreases to 40°C.

When the temperature of hot water at opening 61a decreases to 40°C, the temperature of hot water around shape memory portion 64a decreases to a temperature lower than 40°C by entrance of hot water from opening 61b. As a result, shape memory portion 64a contracts, and thus switching portion 63a shifts downward.

Opening 61b is closed by the downward shift of switching portion 63a, while only opening 61a is open.

In the state illustrated in FIG. 5E, hot water enters only opening 61a, and sequentially passes through mixing portion 66c, opening 61d, and mixing portion 66d to be guided toward extraction portion 62.

While the operation temperatures of shape memory portion 64a and shape memory portion 64b are set to the same temperature of 40°C according to the present exemplary embodiment described herein, the operation temperature of shape memory portion 64b may be set to a temperature higher than the operation temperature of shape memory portion 64a. When extraction portion 62 is located at a position lower than shape memory portion 64b, the hot water coming from opening 61b or opening 61c and having a temperature of 40°C, for example, becomes hot water having a temperature lower than 40°C at extraction portion 62 by heat conduction to surrounding low-temperature hot water. Accordingly, a change from the set temperature at extraction portion 62 is avoidable when the operation temperature of shape memory portion 64b is set to a temperature higher than 40°C.

### THIRD EXEMPLARY EMBODIMENT

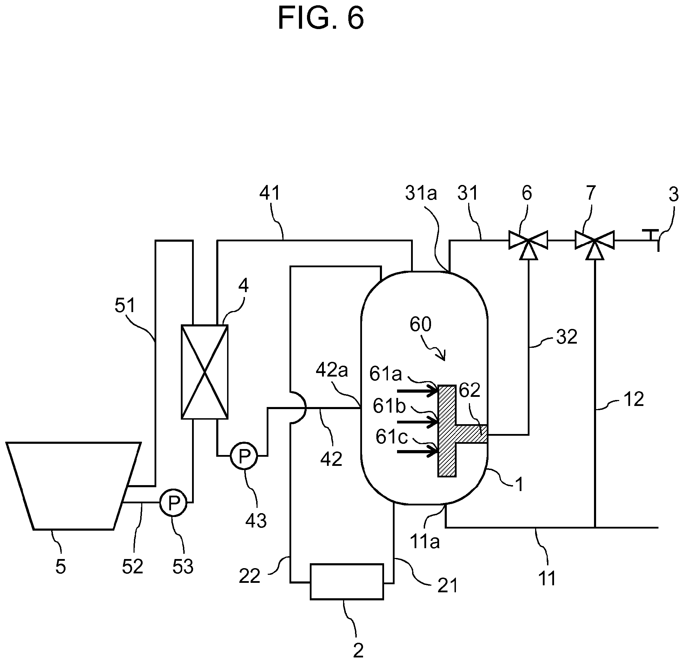

FIG. 6 is a configuration view illustrating a water heater according to a third exemplary embodiment. In the present exemplary embodiment, constituent elements similar to the corresponding elements in the first exemplary embodiment have been given similar reference numbers, and the same description of these elements is not repeated herein.

According to the present exemplary embodiment, opening 61a is formed above the height of extraction portion 62, opening 61b is formed at a height equivalent to the height of extraction portion 62, and opening 61c is formed below the height of extraction portion 62. When openings 61a, 61b, 61c are formed at the different positions equivalent to or higher or lower than the height of extraction portion 62 as in this configuration, rapid supply of hot water having a predetermined temperature, and a stable temperature distribution within hot water tank 1 are achievable during extraction of middle temperature water. Moreover, high temperature water within hot water tank 1 does not decrease during a stop of extraction of middle temperature water.

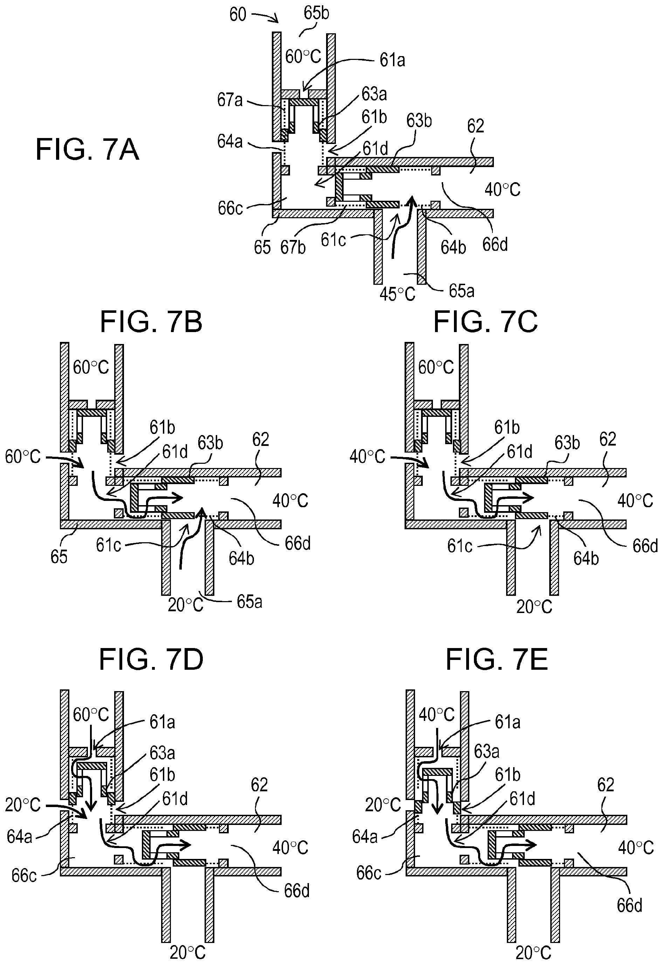

FIGS. 7A through 7E are explanatory views illustrating a configuration and an operation of the middle temperature water outlet unit according to the third exemplary embodiment. A part of explanation similar to the explanation of the first exemplary embodiment or the second exemplary embodiment is not repeated herein.

The configuration of middle temperature water outlet unit 60 is described herein with reference to FIG. 7A.

Switching portion 63b changes opening areas of opening 61d and opening 61c by shifting in the horizontal direction.

Shape memory portion 64b is provided on the downstream side of switching portion 63b. Shape memory portion 64b moves switching portion 63b toward the downstream side when a temperature of surrounding hot water becomes lower than a predetermined temperature.

Described hereinafter is an operation of middle temperature water outlet unit body 65 performed when a temperature of hot water at extraction portion 62 is set to 40°C. Shape memory portions 64a, 64b deform in a contracting direction when the temperature of surrounding hot water becomes lower than 40°C.

FIG. 7A illustrates a state that the temperature of hot water at lower end opening 65a of middle temperature water outlet unit body 65 is 45°C.

In this case, the temperature of hot water at lower end opening 61c is higher than 40°C. Accordingly, shape memory portion 64b expands, and thus switching portion 63b shifts toward the upstream side. In the state of switching portion 63b shifted to the upstream side, opening 61c is opened, while opening 61d is closed.

On the other hand, in a state that shape memory portion 64a is located above opening 61c, the temperature of hot water around shape memory portion 64a is higher than 40°C. In this case, shape member portion 63a expands, and thus switching portion 63a shifts upward. In the state of switching portion 63a shifted upward, opening 61b is opened, while opening 61a is closed.

In the state illustrated in FIG. 7A, hot water enters opening 61c, and passes through mixing portion 66d to be guided toward extraction portion 62.

FIG. 7B illustrates a state that the temperature of hot water at opening 61c of middle temperature water outlet unit body 65 decreases to 20°C.

When the temperature of hot water at opening 61c of middle temperature water outlet unit body 65 lowers, the temperature of hot water around shape memory portion 64b also lowers. As a result, shape memory portion 64b contracts, and thus switching portion 63b shifts to the downstream side.

The opening area of opening 61c decreases by the shift of switching portion 63b to the downstream side. Accordingly, opening 61d starts to open. In the opened state opening 61b, hot water at 60°C enters opening 61d from opening 61b. An entrance amount of water at 20°C decreases by the decrease in the opening area of opening 61c, while an entrance amount of hot water at 60°C increases by the increase in the opening area of opening 61d. The temperature of hot water around shape memory portion 64b increases by the opened state of opening 61d. Switching portion 63b shifts until the temperature of hot water around shape memory portion 64b becomes 40°C.

In the state illustrated in FIG. 7B, hot water enters opening 61c and opening 61 b, and passes through mixing portion 66d to be guided toward extraction portion 62. In this case, the parts of hot water entering opening 61c and opening 61b have different temperatures of 20°C and 60°C, respectively.

FIG. 7C illustrates a state that the temperature of hot water at opening 61b decreases to 40°C.

When the temperature of hot water at opening 61b decreases to 40°C, the temperature of hot water around shape memory portion 64b decreases to a temperature lower than 40°C by entrance of hot water from opening 61c. As a result, shape memory portion 64b contracts, and thus switching portion 63b shifts to the downstream side.

Opening 61c is closed by the shift of switching portion 63b to the downstream side. Accordingly, only opening 61d is open.

In the state illustrated in FIG. 7C, hot water flows into opening 61d from only opening 61b, and passes through mixing portion 66d to be guided toward extraction portion 62.

FIG. 7D illustrates a state that the temperature of hot water at opening 61b decreases to a temperature lower than 40°C, such as 20°C.

When the temperature of hot water at opening 61b decreases to 20°C, the temperature of hot water around shape memory portion 64a becomes lower than 40°C. As a result, shape memory portion 64a contracts, and thus switching portion 63a shifts downward.

The opening area of opening 61b decreases by the downward shift of switching portion 63a. Accordingly, opening 61a starts to open. An entrance amount of water at 20°C decreases by the decrease in the opening area of opening 61b, while an entrance amount of hot water at 60°C increases by the increase in the opening area of opening 61a. The temperature of hot water around shape memory portion 64a increases by the opened state of opening 61a. Switching portion 63a shifts until the temperature of hot water around shape memory portion 64a becomes 40°C.

In the state illustrated in FIG. 7D, hot water enters opening 61b and opening 61a, and sequentially passes through mixing portion 66c, opening 61d, and mixing portion 66d to be guided toward extraction portion 62. In this case, parts of the hot water entering opening 61b and opening 61a have different temperatures of 20°C and 60°C, respectively.

FIG. 7E illustrates a state that the temperature of hot water at opening 61a decreases to 40°C.

When the temperature of hot water at opening 61a decreases to 40°C, the temperature of hot water around shape memory portion 64a decreases to a temperature lower than 40°C by entrance of hot water from opening 61b. As a result, shape memory portion 64a contracts, and thus switching portion 63a shifts downward.

Opening 61b is closed by the downward shift of switching portion 63a, while only opening 61a is open.

In the state illustrated in FIG. 7E, hot water enters only opening 61a, and sequentially passes through mixing portion 66c, opening 61d, and mixing portion 66d to be guided toward extraction portion 62.

### FOURTH EXEMPLARY EMBODIMENT

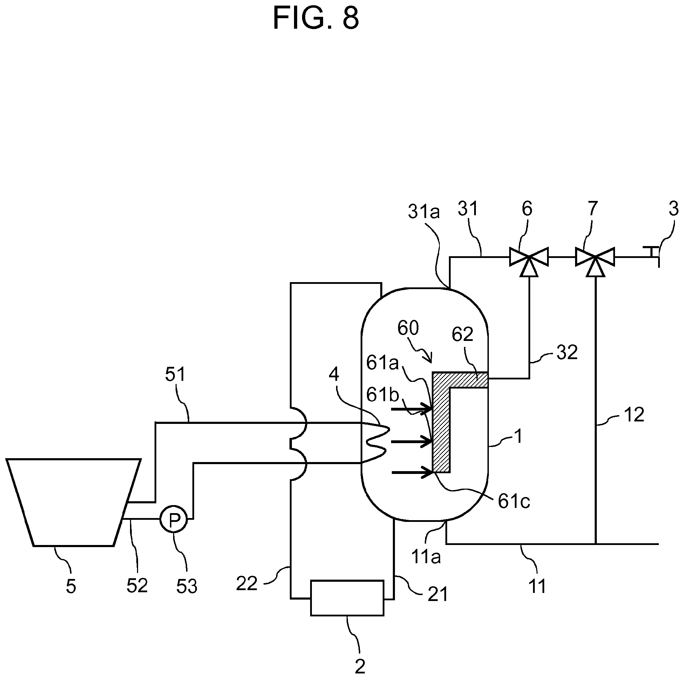

FIG. 8 is a configuration view illustrating a water heater according to a fourth exemplary embodiment. In the present exemplary embodiment, constituent elements similar to the corresponding elements in the first exemplary embodiment have been given similar reference numbers, and the same description of these elements is not repeated herein.

Heat exchanger 4 according to the present exemplary embodiment is disposed inside hot water tank 1, and uses high temperature water in hot water tank 1 as a heating source. Heat exchanger 4 and heat utilizing terminal 5 are connected to each other via heat medium supply pipe 51 and heat medium return pipe 52. One end of heat medium supply pipe 51 is connected to heat exchanger 4, while another end of heat medium supply pipe 51 is connected to heat utilizing terminal 5. One end of heat medium return pipe 52 is connected to heat utilizing terminal 5, while another end of heat medium return pipe 52 is connected to heat exchanger 4. Circulation pump 53 is provided on heat medium return pipe 52. A heat medium of heat utilizing terminal 5 is guided to heat exchanger 4 via heat medium return pipe 52. The heat medium heated at heat exchanger 4 is supplied to heat utilizing terminal 5 via heat medium supply pipe 51.

According to the present exemplary embodiment, a set position of heat exchanger 4 in an up-down direction is disposed at a height between opening 61a located at the highest position and opening 61c located at the lowest position. In this case, hot water present near opening 61a and maintaining a relatively high temperature, and middle temperature water produced within hot water tank 1 by heat exchange with heat exchanger 4 and having a relatively low temperature at opening 61b or opening 61c are mixed, and used for supply of hot water. Accordingly, particularly in case of using a heat pump device as heating unit 2, there can be provided the water heater which reduces a heating amount of middle temperature water which lowers efficiency during heating and has improved energy saving performance.

According to the present exemplary embodiment, it is preferable that a setting position of a highest part of heat exchanger 4 in the up-down direction is equivalent to or higher than the height of opening 61b located at the second highest position following opening 61a located at the highest position. Middle temperature water produced by heat exchange with heat exchanger 4 has larger specific gravity than specific gravity of high temperature water, and therefore diffuses more in an area below the setting position of the highest part of heat exchanger 4 in the up-down direction. In this case, a larger amount of middle temperature water is extractable when a larger number of openings (openings 61b, 61c) are provided below the hot water tank connection position of heat utilization return pipe 42 than opening 61a located above the setting position of the highest part of heat exchanger 4 in the up-down direction.

A water heater according to the present disclosure is capable of reducing an efficiency drop caused as a result of utilization of heat of hot water within a hot water tank by a heat utilizing terminal. Accordingly, the water heater is applicable to a large-scale business use as well as a home use, and achieves excellent energy saving performance.

## Claims

1. A water heater comprising:
a hot water tank (1);
a heating unit (2) which heats water in the hot water tank (1); and
a middle temperature water outlet unit (60) provided inside the hot water tank (1),
wherein the middle temperature water outlet unit (60) includes
a plurality of openings (61a, 61b, 61c, 61d) through which hot water within the hot water tank (1) flows into the middle temperature water outlet unit (60),
a switching portion (63a, 63b) that changes an opening area of each of the plurality of openings (61a, 61b, 61c, 61d), and
an extraction portion (62),
the middle temperature water outlet unit (60) mixes respective parts of the hot water flowing from the plurality of openings (61a, 61b, 61c, 61d) into the middle temperature water outlet unit (60) to produce hot water having a predetermined temperature, and discharges the hot water having the predetermined temperature from the extraction portion (62) to an outside of the middle temperature water outlet unit (60), and
when at least two of the plurality of openings (61a, 61b, 61c, 61d) are opened, a temperature of the hot water flowing into the middle temperature water outlet unit (60) from one of the two opened openings (61a, 61b, 61c, 61d) is different from a temperature of the hot water flowing into the middle temperature water outlet unit (60) from another one of the two opened openings (61a, 61b, 61c, 61d),
**characterized in that** the middle temperature water outlet unit (60) further includes a shape memory portion (64a) that moves the switching portion (63a, 63b) based on a temperature of hot water around the shape memory portion (64a).

2. The water heater according to claim 1, wherein the plurality of openings (61a, 61b, 61c, 61d) are formed in a vertical direction inside the hot water tank (1).

3. The water heater according to claim 1 or 2, wherein all of the plurality of openings (61a, 61b, 61c, 61d) are formed at heights equal to or lower than a height of the extraction portion (62).

4. The water heater according to claim 1 or 2, wherein all of the plurality of openings (61a, 61b, 61c, 61d) are formed at heights equal to or higher than a height of the extraction portion (62).

5. The water heater according to claim 1 or 2, wherein the plurality of openings (61a, 61b, 61c, 61d) are formed at different heights equal to or higher or lower than a height of the extraction portion (62).

6. The water heater according to any one of claims 1 through 5, further comprising:
a heat utilization hot water outlet pipe (41) connected to an upper part of the hot water tank (1) to supply the hot water having a high temperature and present within the hot water tank (1) to a heat exchanger (4) provided outside the hot water tank (1); and
a heat utilization return pipe (42) provided to return the hot water from the heat exchanger (4) into the hot water tank (1),
wherein a position of the hot water returning from the heat utilization return pipe (42) into the hot water tank (1) is located at a height between the opening (61a) located at a highest position and the opening (61c) located at a lowest position in the plurality of openings (61a, 61b, 61c, 61d).

7. The water heater according to any one of claims 1 through 5, further comprising a heat exchanger (4) provided inside the hot water tank (1) to exchange heat with the hot water having a high temperature and present within the hot water tank (1), wherein a setting position of a highest part of the heat exchanger (4) is located at a height between the opening (61a) located at a highest position and the opening (61c) located at a lowest position in the plurality of openings (61a, 61b, 61c, 61d).

## Patentansprüche

1. Warmwasserbereiter, umfassend:
einen Warmwasserbehälter (1);
eine Heizeinheit (2), die Wasser in dem Warmwasserbehälter (1) erwärmt; und
eine Mitteltemperaturwasser-Auslasseinheit (60), die in dem Warmwasserbehälter (1) vorgesehen ist,
wobei die Mitteltemperaturwasser-Auslasseinheit (60) enthält:
eine Vielzahl von Öffnungen (61a, 61b, 61c, 61d), durch die Warmwasser innerhalb des Warmwasserbehälters (1) in die Mitteltemperaturwasser-Auslasseinheit (60) fließt,
einen Umschaltabschnitt (63a, 63b), der eine Öffnungsfläche von jeder der Vielzahl von Öffnungen (61a, 61b, 61c, 61d) ändert, und
einen Entnahmeabschnitt (62),
wobei die Mitteltemperaturwasser-Auslasseinheit (60) jeweilige Teile des Warmwassers, die aus der Vielzahl von Öffnungen (61a, 61b, 61c, 61d) in die Mitteltemperaturwasser-Auslasseinheit (60) fließen, mischt um Warmwasser mit einer vorgegebenen Temperatur zu erzeugen, und das Warmwasser mit der vorgegebenen Temperatur von dem Entnahmeabschnitt (62) nach außerhalb der Mitteltemperaturwasser-Auslasseinheit (60) abführt, und
wobei dann, wenn mindestens zwei der Vielzahl von Öffnungen (61a, 61b, 61c, 61d) geöffnet werden, eine Temperatur des Warmwassers, das aus einer der zwei geöffneten Öffnungen (61a, 61b, 61c, 61d) in die Mitteltemperaturwasser-Auslasseinheit (60) fließt, von der Temperatur des Warmwassers abweicht, das aus einer anderen der zwei geöffneten Öffnungen (61a, 61b, 61c, 61d) in die Mitteltemperaturwasser-Auslasseinheit (60) fließt,
**dadurch gekennzeichnet, dass** die Mitteltemperaturwasser-Auslasseinheit (60) ferner einen Formgedächtnisabschnitt (64a) enthält, der den Umschaltabschnitt (63a, 63b) auf der Basis einer Temperatur des Warmwassers um den Formgedächtnisabschnitt (64a) bewegt.

2. Warmwasserbereiter nach Anspruch 1, wobei die Vielzahl von Öffnungen (61a, 61b, 61c, 61d) in einer vertikalen Richtung innerhalb des Warmwasserbehälters (1) ausgebildet sind.

3. Warmwasserbereiter nach Anspruch 1 oder 2, wobei alle der Vielzahl von Öffnungen (61a, 61b, 61c, 61d) auf Höhen ausgebildet sind, die gleich oder niedriger als eine Höhe des Entnahmeabschnitts (62) sind.

4. Warmwasserbereiter nach Anspruch 1 oder 2, wobei alle der Vielzahl von Öffnungen (61a, 61b, 61c, 61d) auf Höhen ausgebildet sind, die gleich oder höher als eine Höhe des Entnahmeabschnitts (62) sind.

5. Warmwasserbereiter nach Anspruch 1 oder 2, wobei die Vielzahl von Öffnungen (61a, 61b, 61c, 61d) auf verschiedenen Höhen ausgebildet sind, die gleich oder höher oder niedriger als eine Höhe des Entnahmeabschnitts (62) sind.

6. Warmwasserbereiter nach einem der Ansprüche 1 bis 5, ferner umfassend:
ein Wärmenutzung-Warmwasser-Auslassrohr (41). das mit einem oberen Teil des Warmwasserbehälters (1) verbunden ist, um das Warmwasser, das eine hohe Temperatur hat und sich in dem Warmwasserbehälter (1) befindet, einem Wärmetauscher (4) zuzuführen, der außerhalb des Warmwasserbehälters (1) vorgesehen ist; und
ein Wärmenutzung-Rücklaufrohr (42), das vorgesehen ist, um das Warmwasser von dem Wärmetauscher (4) in den Warmwasserbehälter (1) zurückzuführen,
wobei sich eine Position des von dem Wärmenutzung-Rücklaufrohr (42) in den Warmwasserbehälter (1) zurückfließenden Warmwassers auf einer Höhe zwischen der in einer höchsten Position befindlichen Öffnung (61a) und der in einer niedrigsten Position befindlichen Öffnung (61c) in der Vielzahl von Öffnungen (61a, 61b, 61c, 61d) befindet.

7. Warmwasserbereiter nach einem der Ansprüche 1 bis 5, ferner umfassend einen Wärmetauscher (4), der in dem Warmwasserbehälter (1) vorgesehen ist, um Wärme mit dem Warmwasser auszutauschen, das eine hohe Temperatur hat und sich in dem Warmwasserbehälter (1) befindet, wobei sich eine Einstellposition eines höchsten Teils des Wärmetauschers (4) auf einer Höhe zwischen der in einer höchsten Position befindlichen Öffnung (61a) und der in einer niedrigsten Position befindlichen Öffnung (61c) in der Vielzahl von Öffnungen (61a, 61b, 61c, 61d) befindet.

## Revendications

1. Chauffe-eau comprenant :
un réservoir d'eau chaude (1) ;
une unité de chauffage (2) qui chauffe de l'eau dans le réservoir d'eau chaude (1) ; et
une unité de sortie d'eau à température moyenne (60) disposée à l'intérieur du réservoir d'eau chaude (1),
l'unité de sortie d'eau à température moyenne (60) incluant
une pluralité d'ouvertures (61a, 61b, 61c, 61d) à travers lesquelles de l'eau chaude à l'intérieur du réservoir d'eau chaude (1) s'écoule dans l'unité de sortie d'eau à température moyenne (60),
une partie de commutation (63a, 63b) qui modifie une surface d'ouverture de chacune de la pluralité d'ouvertures (61a, 61b, 61c, 61d) et
une partie d'extraction (62),
l'unité de sortie d'eau à température moyenne (60) mélangeant des parties respectives de l'eau chaude s'écoulant à partir de la pluralité d'ouvertures (61a, 61b, 61c, 61d) dans l'unité de sortie d'eau à température moyenne (60) pour produire de l'eau chaude ayant une température prédéterminée et évacuant l'eau chaude ayant la température prédéterminée à partir de la partie d'extraction (62) vers un extérieur de l'unité de sortie d'eau à température moyenne (60) et,
lorsqu'au moins deux ouvertures parmi la pluralité d'ouvertures (61a, 61b, 61c, 61d) sont ouvertes, une température de l'eau chaude s'écoulant dans l'unité de sortie d'eau à température moyenne (60) à partir de l'une des deux ouvertures ouvertes (61a, 61b, 61c, 61d) étant différente d'une température de l'eau chaude s'écoulant dans l'unité de sortie d'eau à température moyenne (60) à partir d'une autre des deux ouvertures ouvertes (61a, 61b, 61c, 61d),
**caractérisé en ce que** l'unité de sortie d'eau à température moyenne (60) inclut en outre une partie à mémoire de forme (64a) qui déplace la partie de commutation (63a, 63b) sur la base d'une température d'eau chaude autour de la partie à mémoire de forme (64a).

2. Chauffe-eau selon la revendication 1, la pluralité d'ouvertures (61a, 61b, 61c, 61d) étant formées dans une direction verticale à l'intérieur du réservoir d'eau chaude (1).

3. Chauffe-eau selon la revendication 1 ou 2, toutes les ouvertures de la pluralité d'ouvertures (61a, 61b, 61c, 61d) étant formées à des hauteurs égales ou inférieures à une hauteur de la partie d'extraction (62).

4. Chauffe-eau selon la revendication 1 ou 2, toutes les ouvertures de la pluralité d'ouvertures (61a, 61b, 61c, 61d) étant formées à des hauteurs égales ou supérieures à une hauteur de la partie d'extraction (62).

5. Chauffe-eau selon la revendication 1 ou 2, la pluralité d'ouvertures (61a, 61b, 61c, 61d) étant formées à des hauteurs différentes, égales ou supérieures ou inférieures à une hauteur de la partie d'extraction (62).

6. Chauffe-eau selon l'une quelconque des revendications 1 à 5, comprenant en outre :
un tuyau de sortie d'eau chaude d'utilisation de chaleur (41) raccordé à une partie supérieure du réservoir d'eau chaude (1) pour fournir l'eau chaude ayant une température élevée et présente dans le réservoir d'eau chaude (1) à un échangeur de chaleur (4) disposé à l'extérieur du réservoir d'eau chaude (1) ; et
un tuyau de retour d'utilisation de chaleur (42) prévu pour renvoyer l'eau chaude à partir de l'échangeur de chaleur (4) dans le réservoir d'eau chaude (1),
une position de l'eau chaude revenant du tuyau de retour d'utilisation de chaleur (42) dans le réservoir d'eau chaude (1) étant située à une hauteur entre l'ouverture (61a) située à une position la plus haute et l'ouverture (61c) située à une position la plus basse dans la pluralité d'ouvertures (61a, 61b, 61c, 61d).

7. Chauffe-eau selon l'une quelconque des revendications 1 à 5 comprenant en outre un échangeur de chaleur (4) disposé à l'intérieur du réservoir d'eau chaude (1) pour échanger de la chaleur avec l'eau chaude ayant une température élevée et présente dans le réservoir d'eau chaude (1), une position de réglage d'une partie la plus haute de l'échangeur de chaleur (4) étant située à une hauteur entre l'ouverture (61a) située à une position la plus haute et l'ouverture (61c) située à une position la plus basse dans la pluralité d'ouvertures (61 a, 61 b, 61 c, 61d).
